# EUROPEAN PATENT SPECIFICATION

(11) **EP 4 071 361 B1**
(45) Date of publication and mention of the grant of the patent: **21.08.2024**
(21) Application number: 20935433.1
(22) Date of filing: 09.12.2020
(51) Int. Cl.: F04D 29/58, F04D 29/16

(54) **HEATING PUMP AND DISH WASHING MACHINE**
EIZPUMPE UND GESCHIRRSPÜLMASCHINE
POMPE DE CHAUFFAGE ET MACHINE À LAVER LA VAISSELLE

(30) Priority: 13.05.2020 CN 202010400830
(43) Date of publication of application: 12.10.2022
(73) Proprietor: Foshan Welling Washer Motor Manufacturing Co., Ltd., Foshan, Guangdong 528311 (CN); Huai'An Welling Motor Manufacturing Co., Ltd., Huai'an, Jiangsu 223005 (CN)
(72) Inventor: ZHOU, Yayun, Foshan, Guangdong 528311 (CN); GONG, Tao, Foshan, Guangdong 528311 (CN); JIN, Yi, Foshan, Guangdong 528311 (CN)
(74) Representative: Whitlock, Holly Elizabeth Ann
(86) International application number: PCT/CN2020/135049
(87) International publication number: WO 2021/227476

(56) References cited:
- EP-A1- 3 587 822
- EP-A2- 1 247 993
- CN-A- 107 131 154
- CN-U- 204 082 617
- CN-U- 205 298 048
- CN-U- 208 749 587
- CN-U- 209 856 049
- DE-A1- 102011 003 464

## Description

### FIELD

The present invention relates to the technical field of kitchen appliances, in particular, to a heating pump and a dish washing machine.

### BACKGROUND

At present, for a heating pump with a heating function, a centrifugal impeller is usually provided in a heating cavity. In the prior art, the impeller keeps rotating during operation, and in order to avoid scratching, a part of the mounting position of the impeller which matches with the cover plate of the impeller usually is only at the cylindrical section of the inlet of the impeller, and a covering length as formed is small, which renders that the diameter of the cover plate of the impeller is nearly the same with the diameter of the cylindrical section of the inlet of the impeller, and then the on-way resistance flowing at the mounting position of the impeller and within the cover plate of the impeller is small, and therefore water will easily flow back to the inlet of the impeller along the cover plate of the impeller, and this results in the reduction of the hydraulic efficiency and the lift of a water pump, and thus the hydraulic efficiency of the water pump is affected. EP1247993A2 relates generally to a pump with a tubular heating element, wherein uncontrollable turbulence of the flowing flushing liquid is prevented in the heating cavity and the overall volume of the pump is reduced. DE102011003464A1 relates generally to a heating device for a pump, wherein the noise generated during operation is reduced.

### SUMMARY

Aspects of the invention are set out in the claims. In order to solve at least one of the above technical problems in the prior art, an object of the present invention is to provide a heating pump with high efficiency and high lift.

Another object of the present invention is to provide a dish washing machine which comprises the above heating pump.

In order to achieve the above objects, according to the embodiment of the first aspect of the present invention, a heating pump is provided. The heating pump comprises: a housing, wherein a heating cavity is provided in the housing, and the housing is provided with a water inlet which is communicated with the heating cavity; and an impeller, wherein the impeller is provided in the heating cavity, the impeller comprises an annular cover plate, the first end of the cover plate defines a water inlet port which is correspondingly communicated with the water inlet in a surrounding manner, and the second end of the cover plate extends in a direction away from the water inlet along an axial direction of the impeller and expands outwards; wherein, an annular matching surface is provided in the heating cavity; the outer side of the cover plate is wrapped with the matching surface, and there is a gap between the matching surface and the cover plate; the matching surface has a third end and a fourth end which are arranged in the axial direction of the impeller, the fourth end is arranged corresponding to the second end, and a diameter of the fourth end is greater than or equal to a diameter of the second end.

For the heating pump provided according to the embodiment of the first aspect of the present invention, a matching structure between the cover plate of the impeller and the mounting position of the impeller is improved, and by increasing an on-way resistance and a blocking structure, the purpose of reducing the backflow to the gap of the impeller is achieved, thereby improving the hydraulic efficiency of a water pump.

Specifically, the heating pump comprises the housing and the impeller; the impeller is provided in the heating cavity of the housing; a liquid enters the heating cavity from the water inlet of the housing, enters the impeller through the water inlet port of the impeller, and then is thrown out through the water outlet port of the impeller in a radial direction. Wherein, the impeller comprises the cover plate, a blade and a back plate. The cover plate orients the water inlet and defines the water inlet port of the impeller; and the cover plate extends from the water inlet port along the axial direction of the impeller and extends outwards along the radial direction of the impeller; the blade is provided between the cover plate and the back plate, and defines the water outlet port of the impeller together with the cover plate and the back plate; the back plate is connected with the rotating shaft of a drive device and brings the impeller to rotate as it is driven by the drive device. The outer side of the cover plate is wrapped with the matching surface in the heating cavity, and there is the gap between the matching surface and the annular cover plate, so as to prevent the scratching between the impeller and the matching surface during the rotation. In the rotating process of the impeller, the liquid enters the impeller from the first end of the cover plate, and then is thrown out through the water outlet port in the second end of the cover plate. Since the diameter of the fourth end of the matching surface is greater than or equal to the diameter of the second end of the cover plate, the liquid thrown out by the impeller will be blocked by the matching surface and thus will not easily flow into the gap between the cover plate and the matching surface directly, thereby reducing the backflow and improving the hydraulic efficiency of the water pump.

In the present solution, the length of the matching surface is extended, and then the diameter of the fourth end of the matching surface is greater than or equal to the diameter of the second end of the cover plate, which on the one hand increases the length of the gap and the on-way resistance, and on the other hand uses the matching surface as a blocking structure to block the backflow of the liquid, and thus the purposes of reducing the backflow to the gap and improving the hydraulic efficiency of the water pump are achieved.

In addition, the heating pump in the embodiment provided by the present invention can further have the following additional technical features.

In the embodiment of the present invention, the gap between the matching surface and the cover plate is disposed uniformly.

Therefore, a relatively regular structure is achieved, and this also makes processing and molding convenient, and has a fool-proof function of the assembly. Meanwhile, such an arrangement helps reasonably set the dimension of the gap, and on the basis of preventing scratching, this arrangement can also prevent the liquid entering the heating cavity from directly entering the gap and then avoid affecting the hydraulic efficiency of the water pump.

In the embodiment of the present invention, the cover plate comprises a straight cylindrical section and an arc expansion section which is connected with the straight cylindrical section. An end of the straight cylindrical section which is away from the arc expansion section forms the first end of the cover plate, and an end of the arc expansion section which is away from the straight cylindrical section forms the second end of the cover plate; the matching surface comprises a straight line section and an enlarging section which is connected with the straight line section, and an end of the straight line section which is away from the enlarging section forms the third end of the matching surface, and an end of the enlarging section which is away from the straight line section forms the fourth end of the matching surface; the straight line section surrounds the straight cylindrical section, and the enlarging section surrounds the arc expansion section.

The cover plate comprises the straight cylindrical section and the arc expansion section; the straight cylindrical section is disposed opposite to the water inlet of the housing and defines the water inlet port so as to ensure that the liquid entering from the water inlet can enter the impeller along the axial direction of the impeller. The arc expansion section expands outwards along the radial direction of the impeller, and then the liquid entering the impeller flows along the cover plate in the radial direction of the impeller and is then thrown out. The matching surface correspondingly comprises the straight line section and the enlarging section; the straight line section surrounds the straight cylindrical section, and uniform gap is formed between the straight line section and the straight cylindrical section; the enlarging section surrounds the arc expansion section, and uniform gap is formed between the enlarging section and the arc expansion section. Wherein, the arc expansion section can play a role of blocking the liquid from flowing back to the gap, and thus the hydraulic efficiency of the water pump is effectively ensured.

According to the embodiment of the present invention, a length of the straight line section is greater than that of the straight cylindrical section; an end of the straight line section which is away from the enlarging section is connected with an annular bevel; and the annular bevel extends obliquely in a direction close to the straight cylindrical section along a direction from outside to inside.

The length of the straight line section of the matching surface is disposed to be greater than the length of the straight cylindrical section of the cover plate, and then the end (i.e., the third end of the matching surface) of the straight line section which is away from the enlarging section can go beyond the end (i.e., the first end of the cover plate) of the straight cylindrical section which is away from the arc expansion section. Compared with a flush solution, the present solution is conducive to further extending the length of the gap, and thus extending the on-way resistance and thereby reducing the backflow to the gap. Meanwhile, due to the arrangement of the annular bevel, the liquid in the gap can be blocked and is prevented from flowing inwards along the radial direction towards the water inlet port of the impeller, thereby further reducing the backflow to the gap.

In any one of the above embodiments, the gap between the matching surface and the cover plate is in a range of 0.3 mm to 2.5 mm.

The gap between the matching surface and the cover plate is defined in a range of 0.3 mm to 2.5 mm, and this can not only prevent increasing the risk of the scratching between the impeller and the matching surface as the gap is too small, but also prevent excessive liquid from entering the gap as the gap is too large and further prevent affecting the hydraulic efficiency of the heating pump.

In any one of the above embodiments, a shielding hump is projected from the fourth end, and an end of the shielding hump which is away from the fourth end extends along the axial direction of the impeller and surrounds the second end.

The diameter of the fourth end of the matching surface is disposed to be greater than the diameter of the second end of the cover plate, and thus the shielding effect of the matching surface is improved, thereby further reducing the backflow to the gap. Meanwhile, due to the arrangement of the shielding hump, on the one hand, the length of the gap is further increased and the on-way resistance is further improved, and thus the backflow to the gap is further reduced; on the other hand, the gap forms a corner at the fourth end of the matching surface, and this can further prevent the liquid from going across the corner to flow in the gap, thereby further reducing the backflow to the gap.

In the above embodiments, an end of the shielding hump which is away from the fourth end is flush with the second end.

Since the cover plate has a certain thickness, and the end of the shielding hump which is away from the fourth end along the axial direction of the impeller is set to be flush with the second end of the cover plate, this can prevent the shielding hump from going across the second end of the cover plate and further blocking a portion of the water outlet port of the impeller, thereby ensuring the water outlet efficiency of the impeller and further helping to improve the hydraulic efficiency of the heating pump.

In any one of the above embodiments, the housing is formed with an inner pipe section, and the inner wall face of the inner pipe section forms the matching surface.

Using the inner pipe section of the housing to form the matching surface does not need additional components or separate installation, and thus this is conducive to improving assembling efficiency and reducing costs. Meanwhile, the inner pipe section and the housing are an integrated structure which is of high connection strength, and thus the position stability of the matching surface is also ensured.

In the above embodiment, the housing comprises an upper pump housing, wherein the upper pump housing is provided with the inner pipe section; and a lower pump housing, wherein the lower pump housing is connected with the upper pump housing, an end of the lower pump housing which is away from the upper pump housing is provided with a baffle plate, and a heating cavity is enclosed by the baffle plate, the upper pump housing and the lower pump housing; wherein, the impeller is connected with the drive device, and the drive device comprises a stator, a rotor and a rotating shaft, and the rotating shaft goes through the baffle plate and is connected with the impeller; the lower pump housing comprises a pump housing section and a rotor sleeve; the rotor is located in the rotor sleeve; the stator is sleeved around the outer side of the rotor sleeve; the pump housing section is connected with the upper pump housing and is disposed with a water outlet pipe section.

The housing comprises the upper pump housing and the lower pump housing, the upper pump housing and the lower pump housing are disposed separately, and this is conducive to the assembly of the heating pipe and the impeller, and also helps design the shapes of the upper pump housing and the lower pump housing reasonably according to needs, and helps process and mold the upper pump housing and the lower pump housing. The baffle plate is disposed to separate the heating cavity from the drive device, and this prevents the liquid from affecting the drive device. The rotating shaft of the drive device goes through the baffle plate and is connected with the impeller, which ensures that the impeller can rotate when driven by the drive device.

In the above embodiments, the upper pump housing comprises a straight pipe section and a rotating section which is connected with the straight pipe section; the rotating section is sleeved around the outer side of the inner pipe section; the water inlet is connected with the water inlet pipe section, and the water inlet pipe section is connected with the rotating section through a reinforcing rib; a heating pipe is provided in the heating cavity, and the heating pipe comprises a straight-line heating section and an arc heating section; the straight-line heating section is located within the straight pipe section, and the arc heating section is located within the rotating section.

In the present solution, the heating pipe comprises the straight-line heating section and the arc heating section; correspondingly, the upper pump housing comprises a straight pipe and the rotating section, and thus, both of the straight-line heating section and the arc heating section of the heating pipe are located in the heating cavity; in addition, the heating pipe is relatively long and thus has a relatively high heating efficiency. Meanwhile, the upper pump housing further comprises a water inlet pipe section, and the water inlet pipe section is connected with the rotating section through the reinforcing rib, thereby ensuring the strength and the stability of the water inlet pipe section, and this is conducive to the connection with soft water inlet pipes such as rubber pipes.

In the above embodiment, a first gasket ring is provided between the upper pump housing and the lower pump housing; a second gasket ring is provided between the baffle plate and the rotating shaft; the upper pump housing is a flame-retardant pump housing; and the rotor sleeve and the pump housing section are an integrated structure.

Providing a first gasket ring between the upper pump housing and the lower pump housing can prevent the liquid from flowing out of the gap between the upper pump housing and the lower pump housing, thereby improving the sealing effect of the heating cavity.

Providing a second gasket ring between the baffle plate and the rotating shaft can prevent the liquid from flowing out of the gap between the baffle plate and the rotating shaft, thereby improving the sealing effect of the heating cavity.

Disposing the upper pump housing to be a flame-retardant pump housing can prevent the upper pump housing from catching fire due to overheating, thereby improving the safety of the heating pump in use.

Designing the rotor sleeve and the pump housing section to be an integrated structure not only helps to improve the connection strength between the rotor sleeve and the pump housing section, but also saves the connection process therebetween, thereby reducing installation costs.

According to the embodiment of the second aspect of the present invention, a dish washing machine is provided, wherein the dish washing machine comprises: a dish washing machine body; and a heating pump according to any one of the embodiments of the first aspect, and the heating pump is connected with the dish washing machine body.

As the dish washing machine provided according to the embodiments of the second aspect of the present invention comprises the heating pump in any one of the embodiments of the first aspect, and thus has all the beneficial effects in any one of the above embodiments, which will not be repeated herein.

### BRIEF DESCRIPTION OF THE DRAWINGS

FIG. 1 is a schematic view of the breakdown structure of a heating pump according to some embodiments of the present invention;
FIG. 2 is a schematic view of a sectional structure of the heating pump as shown in FIG. 1 after it is assembled;
FIG. 3 is an enlarged view of the impeller in FIG. 2;
FIG. 4 is a partial stereoscopic enlarged schematic view of the heating pump as shown in FIG. 1 after it is assembled;
FIG. 5 is a schematic view of the breakdown structure of a heating pump according to some embodiments of the present invention;
FIG. 6 is a partial enlarged schematic view of the heating pump as shown in FIG. 5;
FIG. 7 is a partial enlarged schematic view of a structure as shown in FIG. 6;
FIG. 8 is a schematic view of the breakdown structure of a heating pump according to an embodiment of the present invention;
FIG. 9 is a partial enlarged schematic view of the heating pump as shown in FIG. 8;
FIG. 10 is a partial enlarged schematic view of a structure as shown in FIG. 9;
FIG. 11 is a schematic view of the breakdown structure of a heating pump according to an embodiment of the present invention;
FIG. 12 is a partial enlarged schematic view of the heating pump as shown in FIG. 11;
FIG. 13 is a partial enlarged schematic view of a structure as shown in FIG. 12; and
FIG. 14 is a block diagram of a dish washing machine according to some embodiments of the present invention.

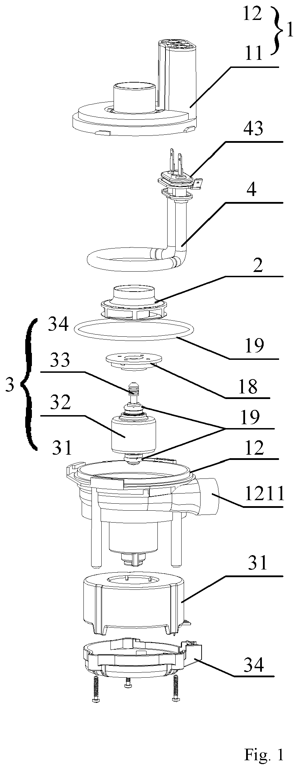

Wherein, the corresponding relations between the reference signs in FIG. 1 to FIG. 14 and the names of the components are as follows:
1 housing; 11 upper pump housing; 111 inner pipe section; 1111 matching surface; 1112 third end; 1113 fourth end; 1114 straight line section; 1115 enlarging section; 112 straight pipe section; 113 rotating section; 114 water inlet pipe section; 1141 water inlet; 115 reinforcing rib; 12 lower pump housing; 121 pump housing section; 1211 water outlet pipe section; 1212 installation port; 122 rotor sleeve; 13 heating cavity; 15 gap; 16 annular bevel; 17 shielding hump; 18 baffle plate; 19 first, second and small gasket rings; 2 impeller; 21 cover plate; 211 first end; 212 second end; 213 water inlet port; 214 straight cylindrical section; 215 arc expansion section; 22 blade; 23 back plate; 3 drive device; 31 stator; 32 rotor; 33 rotating shaft; 34 shell; 35 bearing; 4 heating pipe; 41 straight-line heating section; 42 arc heating section; 43 connecting structure; 100 dish washing machine; 102 dish washing machine body; and 104 heating pump.

### DETAILED DESCRIPTION OF THE INVENTION

In order that the above-mentioned objectives, features and advantages of the present invention can be understood more clearly, a further detailed description of the present invention will be given below in connection with the accompanying drawings and specific embodiments. It should be noted that the embodiments of the present invention and the features in the embodiments can be combined with each other if there is no conflict.

In the following description, numerous specific details are set forth in order to provide a thorough understanding of the present invention. However, the present invention can also be implemented in other manners than those described herein. Therefore, the protection scope of the present invention is not limited to the specific embodiments disclosed below.

Referring to FIG. 1 to FIG. 14, heating pumps and dish washing machines according to some embodiments of the present invention are described in the following.

According to the embodiments of the first aspect of the present invention, a heating pump 104 is provided, wherein the heating pump 104 comprises a housing 1 and an impeller 2, as shown in FIG. 1.

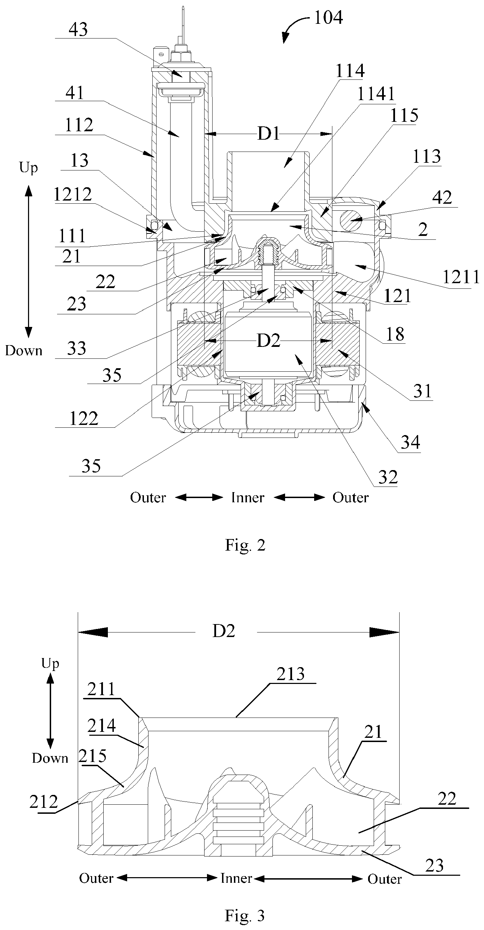

Specifically, a heating cavity 13 (as shown in FIG. 2) is provided in the housing 1. The housing 1 is provided with a water inlet 1141 (as shown in FIG. 2) which is communicated with the heating cavity 13.

The impeller 2 is provided in the heating cavity 13. The impeller 2 comprises an annular cover plate 21. The first end 211 of the cover plate 21 defines a water inlet port 213 (as shown in FIG. 3) which is correspondingly communicated with the water inlet 1141 in a surrounding manner. The second end 212 of the cover plate 21 extends in a direction away from the water inlet 1141 along the axial direction of the impeller 2 and expands outwards.

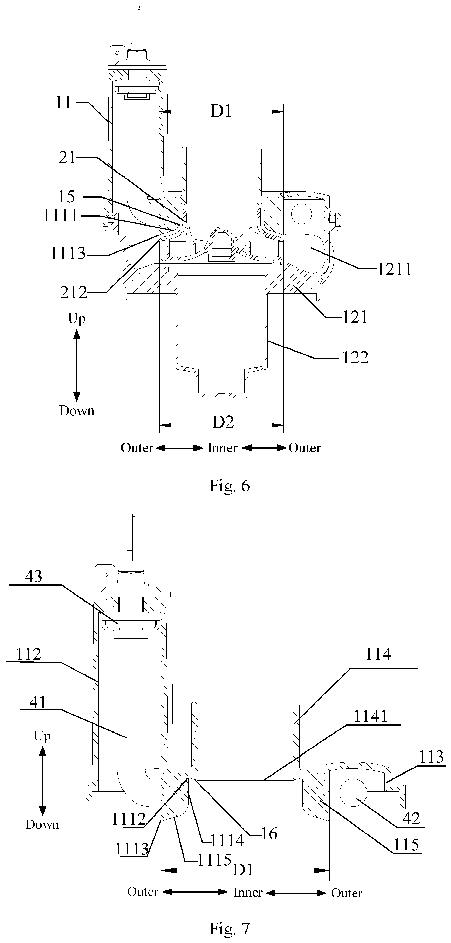

Wherein, an annular matching surface 1111 (as shown in FIG. 6) is provided in the heating cavity 13. The outer side of the cover plate 21 is wrapped with the matching surface 1111, and there is a gap 15 between the matching surface 1111 and the cover plate 21. The matching surface 1111 has a third end 1112 and a fourth end 1113 which are arranged in the axial direction of the impeller 2, as shown in FIG. 7. The fourth end 1113 is arranged corresponding to the second end 212, as shown in FIG. 6. In addition, the diameter D1 of the fourth end 1113 is greater than or equal to the diameter D2 of the second end 212.

For the heating pump 104 provided according to the embodiments of the first aspect of the present invention, a matching structure between the cover plate 21 of the impeller 2 and the mounting position of the impeller 2 is improved, and by increasing an on-way resistance and a blocking structure, the purpose of reducing the backflow to the gap of the impeller 2 is achieved, thereby improving the hydraulic efficiency of a water pump.

Specifically, the heating pump 104 comprises the housing 1 and the impeller 2; the impeller 2 is provided in the heating cavity 13 of the housing 1; a liquid enters the heating cavity 13 from the water inlet 1141 of the housing 1, enters the impeller 2 through the water inlet port 213 of the impeller 2, and then is thrown out through the water outlet port of the impeller 2 in a radial direction. Wherein, the impeller 2 comprises the cover plate 21, a blade 22 and a back plate 23, as shown in FIG. 3. The cover plate 21 orients the water inlet 1141 and defines the water inlet port 213 of the impeller 2; and the cover plate 21 extends from the water inlet port 213 along the axial direction of the impeller 2 and extends outwards along the radial direction of the impeller 2. The blade 22 is provided between the cover plate 21 and the back plate 23, and defines the water outlet port of the impeller 2 together with the cover plate 21 and the back plate 23. The back plate 23 is connected with the rotating shaft 33 of a drive device 3 and brings the impeller 2 to rotate as it is driven by the drive device 3. The outer side of the cover plate 21 is wrapped with the matching surface 1111 in the heating cavity 13, and there is the gap 15 between the matching surface 1111 and the cover plate 21, so as to prevent the scratching between the impeller 2 and the matching surface 1111 during the rotation. In the rotating process of the impeller 2, the liquid enters the impeller 2 from the first end 211 of the cover plate 21, and then is thrown out through the water outlet port in the second end 212 of the cover plate 21. Since the diameter of the fourth end 1113 of the matching surface 1111 is greater than or equal to the diameter of the second end 212 of the cover plate 21, the liquid thrown out by the impeller 2 will be blocked by the matching surface 1111 and thus will not easily flow into the gap 15 between the cover plate 21 and the matching surface 1111 directly, thereby reducing the backflow and improving the hydraulic efficiency of the water pump.

It needs to be explained that after research, it is found that in the prior art the diameter of the fourth end 1113 of the matching surface 1111 is usually smaller than the diameter of the second end 212 of the cover plate 21, and this renders that the water easily enters the gap 15 between the cover plate 21 and the matching surface 1111 along the cover plate 21, and thus the hydraulic efficiency of the water pump is reduced. However, the present solution is equivalent to extending the length of the matching surface 1111, and then the diameter of the fourth end 1113 of the matching surface 1111 is greater than or equal to the diameter of the second end 212 of the cover plate 21, which on the one hand increases the length of the gap 15 and the on-way resistance, and on the other hand uses the matching surface 1111 as a blocking structure to block the liquid from flowing back, and thus the purposes of reducing the backflow to the gap 15 and improving the hydraulic efficiency of the water pump 104 are achieved.

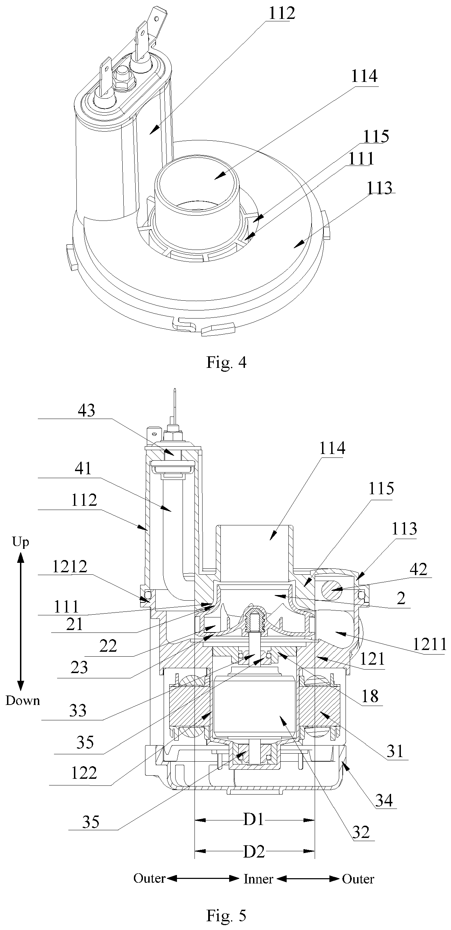

### Embodiment 1 (as shown in FIG. 5, FIG. 6 and FIG. 7)

The diameter D1 of the fourth end 1113 is equal to the diameter D2 of the second end 212, as shown in FIG. 5.

Wherein, the gap 15 between the matching surface 1111 and the cover plate 21 is disposed uniformly, as shown in FIG. 6.

According to the embodiment of the present invention, the gap 15 between the matching surface 1111 and the cover plate 21 is disposed uniformly, and thus a relatively regular structure is achieved, and this also makes processing and molding convenient, and has a fool-proof function of the assembly. Meanwhile, such an arrangement helps reasonably set the dimension of the gap 15, and on the basis of preventing scratching, this arrangement can also prevent the liquid entering the heating cavity 13 from directly entering the gap 15 and then avoid affecting the hydraulic efficiency of the water pump 104.

According to an embodiment not covered by the present invention, the gap 15 between the matching surface 1111 and the cover plate 21 can also be disposed non-uniformly, and the function of reducing the backflow can also be achieved as long as the diameter of the fourth end 1113 of the matching surface 1111 is greater than or equal to the diameter of the second end 212 of the cover plate 21.

Furthermore, the cover plate 21 comprises a straight cylindrical section 214 and an arc expansion section 215 which is connected with the straight cylindrical section 214, as shown in FIG. 3. An end of the straight cylindrical section 214 which is away from the arc expansion section 215 forms the first end 211 of the cover plate 21. An end of the arc expansion section 215 which is away from the straight cylindrical section 214 forms the second end 212 of the cover plate 21. The matching surface 1111 comprises a straight line section 1114 and an enlarging section 1115 which is connected with the straight line section 1114, as shown in FIG. 7. An end of the straight line section 1114 which is away from the enlarging section 1115 forms the third end 1112 of the matching surface 1111, and an end of the enlarging section 1115 which is away from the straight line section 1114 forms the fourth end 1113 of the matching surface 1111. The straight line section 1114 surrounds the straight cylindrical section 214, and the enlarging section 1115 surrounds the arc expansion section 215.

The cover plate 21 comprises the straight cylindrical section 214 and the arc expansion section 215; the straight cylindrical section 214 is disposed opposite to the water inlet 1141 of the housing 1 and defines the water inlet port 213 so as to ensure that the liquid entering from the water inlet 1141 can enter the impeller 2 along the axial direction of the impeller 2. The arc expansion section 215 expands outwards along the radial direction of the impeller 2, and then the liquid entering the impeller 2 flows along the cover plate 21 in the radial direction of the impeller 2 and is then thrown out. The matching surface 1111 correspondingly comprises the straight line section 1114 and the enlarging section 1115; the straight line section 1114 surrounds the straight cylindrical section 214, and the gap 15 is formed uniformly between the straight line section 1114 and the straight cylindrical section 214. The enlarging section 1115 surrounds the arc expansion section 215, and the gap 15 is formed uniformly between the enlarging section 1115 and the arc expansion section 215. Wherein, the arc expansion section 215 can play a role of blocking the liquid from flowing back to the gap 15, and thus the hydraulic efficiency of the water pump is effectively ensured.

Furthermore, the length of the straight line section 1114 is greater than that of the straight cylindrical section 214. An end of the straight line section 1114 which is away from the enlarging section 1115 is connected with an annular bevel 16 (as shown in FIG. 7). The annular bevel 16 extends obliquely in a direction close to the straight cylindrical section 214 along a direction from outside to inside.

The length of the straight line section 1114 of the matching surface 1111 is disposed to be greater than the length of the straight cylindrical section 214 of the cover plate 21, and then the end (i.e., the third end 1112 of the matching surface 1111) of the straight line section 1114 which is away from the enlarging section 1115 can go beyond the end (i.e., the first end 211 of the cover plate 21) of the straight cylindrical section 214 which is away from the arc expansion section 215. Compared with a flush solution, the present solution is conducive to further extending the length of the gap 15, and thus extending the on-way resistance and thereby reducing the backflow to the gap 15. Meanwhile, due to the arrangement of the annular bevel 16, the liquid in the gap 15 can be blocked and is prevented from flowing inwards along the radial direction towards the water inlet port 213 of the impeller 2, thereby further reducing the backflow to the gap 15.

Specifically, the gap 15 between the matching surface 1111 and the cover plate 21 is in a range of 0.3 mm to 2.5 mm, such as 0.3 mm, 0.5 mm, 1 mm, 1.5 mm, 2 mm, 2.5 mm, and this can not only prevent the increasing of the risk of the scratching between the impeller 2 and the matching surface 1111 as the gap 15 is too small, but also prevent excessive liquid from entering the gap 15 as the gap 15 is too large and further prevent affecting the hydraulic efficiency of the heating pump 104.

When the gap 15 is measured specifically, the gap 15 in a radial direction between the straight line section 1114 of the matching surface 1111 and the straight cylindrical section 214 of the cover plate 21 can be taken as a standard, and this is conducive to the measurement.

Apparently, the width of the gap 15 between the matching surface 1111 and the cover plate 21 is not limited to the above range, and can be adjusted according to the requirements in an actual manufacturing process.

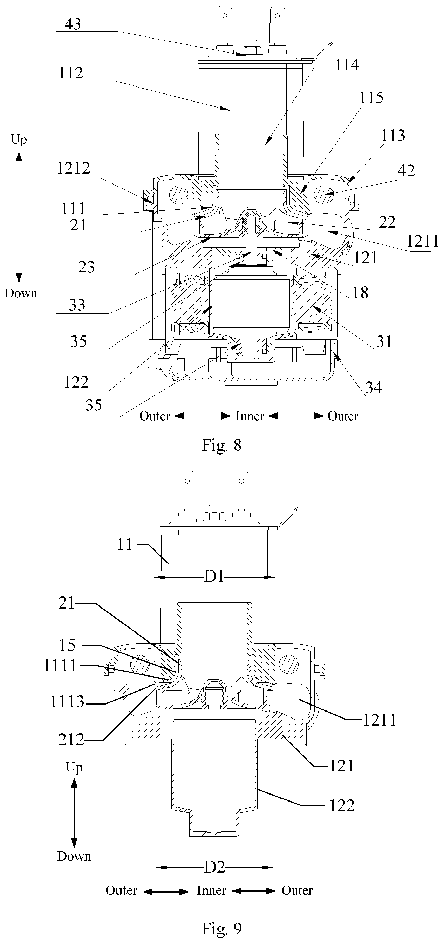

### Embodiment 2 (as shown in FIG. 8, FIG. 9 and FIG. 10)

Compared with the embodiment 1, the difference lies in that the diameter D1 of the fourth end 1113 is greater than the diameter D2 of the second end 212.

The diameter of the fourth end 1113 of the matching surface 1111 is disposed to be greater than the diameter of the second end 212 of the cover plate 21, and thus the shielding effect of the matching surface 1111 is improved, thereby further reducing the backflow to the gap 15.

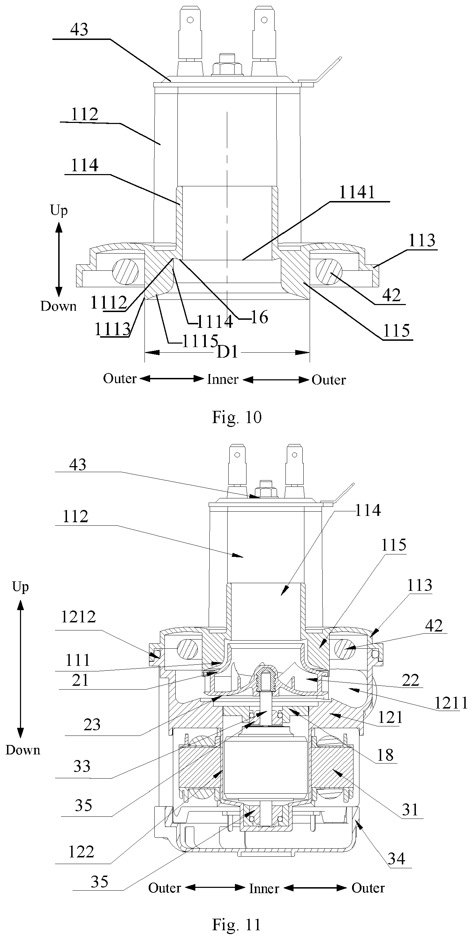

### Embodiment 3 (as shown in FIG. 11, FIG. 12 and FIG. 13)

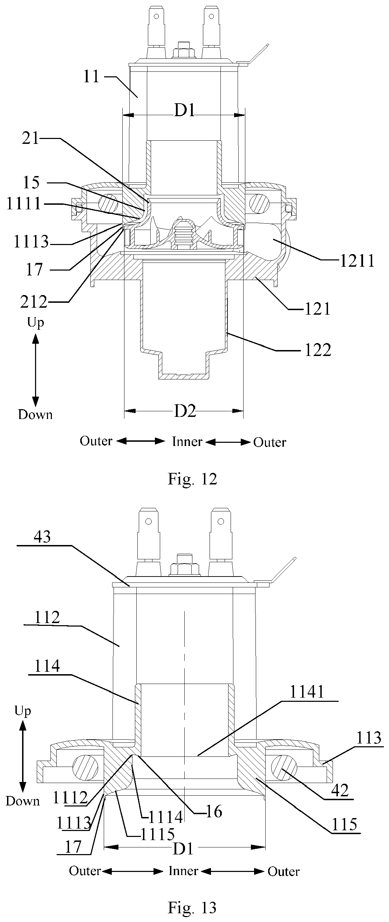

Compared with the embodiment 2, the difference lies in the following: on the basis of the embodiment 2, furthermore, a shielding hump 17 (as shown in FIG. 13) is projected from the fourth end 1113. The shielding hump 17 extends along the axial direction of the impeller 2 and surrounds the second end 212.

Due to the arrangement of the shielding hump 17, on the one hand, the length of the gap 15 is further increased and the on-way resistance is further improved, and thus the backflow to the gap 15 is further reduced; on the other hand, the gap 15 forms a corner at the fourth end 1113 of the matching surface 1111, and this can further prevent the liquid from going across the corner to flow in the gap 15, thereby further reducing the backflow to the gap 15.

Furthermore, the end of the shielding hump 17 which is away from the fourth end 1113 is flush with the second end 212.

Since the cover plate 21 has a certain thickness, and the end of the shielding hump 17 which is away from the fourth end 1113 along the axial direction of the impeller 2 is set to be flush with the end face of the second end 212 of the cover plate 21 close to the water outlet port along the axial direction of the impeller 2, this can prevent the shielding hump 17 from going across the second end 212 of the cover plate 21 and further blocking a portion of the water outlet port of the impeller 2, thereby ensuring the water outlet efficiency of the impeller 2 and further helping to improve the hydraulic efficiency of the heating pump 104.

In any one of the above embodiments, specifically, the housing 1 is formed with an inner pipe section 111, as shown in FIG. 4. The inner wall face of the inner pipe section 111 forms the matching surface 1111.

The inner pipe section 111 of the housing 1 is used to form the matching surface 1111, and thus no additional components or separate installation are required, which is conducive to improving assembling efficiency and reducing costs. Meanwhile, the inner pipe section 111 and the housing 1 are an integrated structure which is of high connection strength, and thus the position stability of the matching surface 1111 is also ensured.

Furthermore, the housing 1 comprises an upper pump housing 11 and a lower pump housing 12, as shown in FIG. 1. The upper pump housing 11 is provided with the inner pipe section 111. The lower pump housing 12 is connected with the upper pump housing 11, and an end of the lower pump housing 12 which is away from the upper pump housing 11 is provided with a baffle plate 18, as shown in FIG. 2. A heating cavity 13 is enclosed by the baffle plate 18, the upper pump housing 11 and the lower pump housing 12.

Wherein, the impeller 2 is connected with the drive device 3, and the drive device 3 comprises a stator 31, a rotor 32 and a rotating shaft 33, as shown in FIG. 1. The rotating shaft 33 goes through the baffle plate 18 and is connected with the impeller 2. The lower pump housing 12 comprises a pump housing section 121 and a rotor sleeve 122, as shown in Fig. 6. The rotor 32 is located in the rotor sleeve 122, as shown in FIG. 2. The stator 31 is sleeved around the outer side of the rotor sleeve 122. The pump housing section 121 is connected with the upper pump housing 11 and is disposed with a water outlet pipe section 1211, as shown in FIG. 2.

The housing 1 comprises the upper pump housing 11 and the lower pump housing 12, and the upper pump housing 11 and the lower pump housing 12 are disposed separately, and this is conducive to the assembly of the heating pipe 4 and the impeller 2, also helps design the shapes of the upper pump housing 11 and the lower pump housing 12 reasonably according to needs, and helps process and mold the upper pump housing 11 and the lower pump housing 12. The baffle plate 18 is disposed to separate the heating cavity 13 from the drive device 3, and this prevents the liquid from affecting the drive device 3. The rotating shaft 33 of the drive device 3 goes through the baffle plate 18 and is connected with the impeller 2, which ensures that the impeller 2 can rotate when driven by the drive device 3.

Furthermore, the drive device 3 further comprises a shell 34, as shown in FIG. 1. The shell 34, the stator 31 and the pump housing section 121 are fixedly connected through fasteners such as screws.

More specifically, the upper pump housing 11 comprises a straight pipe section 112 and a rotating section 113 which is connected with the straight pipe section 112, as shown in FIG. 4. The rotating section 113 is sleeved around the outer side of the inner pipe section 111. The water inlet 1141 is connected with the water inlet pipe section 114, and the water inlet pipe section 114 is connected with the rotating section 113 through a reinforcing rib 115, as shown in FIG. 4. A heating pipe 4 is provided in the heating cavity 13. The heating pipe 4 comprises a straight-line heating section 41 and an arc heating section 42, as shown in FIG. 2. The straight-line heating section 41 is located within the straight pipe section 112, and the arc heating section 42 is located within the rotating section 113.

In the present solution, the heating pipe 4 comprises the straight-line heating section 41 and the arc heating section 42; correspondingly, the upper pump housing 11 comprises a straight pipe and the rotating section 113, and thus, both of the straight-line heating section 41 and the arc heating section 42 of the heating pipe 4 are located in the heating cavity 13; in addition, the heating pipe 4 has a relatively long length and thus has a relatively high heating efficiency. Meanwhile, the upper pump housing 11 further comprises a water inlet pipe section 114, and the water inlet pipe section 114 is connected with the rotating section 113 through the reinforcing rib 115, thereby ensuring the strength and the stability of the water inlet pipe section 114, and this is conducive to the connection with soft water inlet pipes such as rubber pipes.

Furthermore, a first gasket ring 19 is provided between the upper pump housing 11 and the lower pump housing 12, as shown in FIG. 1. This can prevent the liquid from flowing out of the gap 15 between the upper pump housing 11 and the lower pump housing 12, thereby improving the sealing effect of the heating cavity 13. Specifically, the pump housing section 121 of the lower pump housing 12 is provided with an installation port 1212, the installation port 1212 is connected with the upper pump housing 11, and the first gasket ring 19 is provided at the installation port 1212.

Furthermore, a second gasket ring 19 is provided between the baffle plate 18 and the rotating shaft 33, and this can prevent the liquid from flowing out of the gap 15 between the baffle plate 18 and the rotating shaft 33, thereby improving the sealing effect of the heating cavity 13. Specifically, the two ends of the rotating shaft 33 are sleeved with a bearing 35, and a second gasket ring 19 is provided between the bearing 35 at the baffle plate 18 and the baffle plate 18; another bearing 35 is provided in the rotor sleeve 122, and a second gasket ring 19 is also provided between the bearing 35 and the rotor sleeve 122.

Furthermore, the upper pump housing 11 is a flame-retardant pump housing and can prevent the upper pump housing 11 from catching fire due to overheating, thereby improving the safety of the heating pump 104 in use.

Furthermore, the rotor sleeve 122 and the pump housing section 121 are an integrated structure, and this not only helps to improve the connection strength between the rotor sleeve 122 and the pump housing section 121, but also saves the connection process therebetween, thereby reducing installation costs.

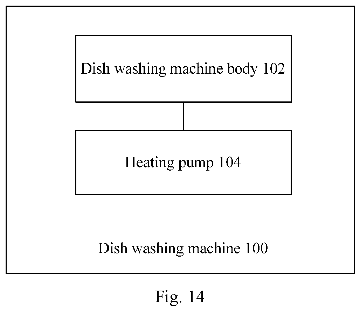

As shown in FIG. 14, according to the embodiments of the second aspect of the present invention, a dish washing machine 100 is provided, wherein the dish washing machine 100 comprises a dish washing machine body 102 and a heating pump 104 according to any one of the embodiments of the first aspect, and the heating pump 104 is connected with the dish washing machine body 102.

As the dish washing machine 100 provided according to the embodiments of the second aspect of the present invention comprises the heating pump 104 in any one of the embodiments of the first aspect, and thus has all the beneficial effects in the above embodiments, which will not be repeated herein.

### Specific embodiment

A dish washing machine 100 comprises a dish washing machine body 102 and a heating pump 104 according to any of the embodiments of the first aspect of the present invention. The dish washing machine body 102 comprises the structures such as a controlling device and a water inlet valve. The water inlet valve is connected with a water inlet 1141 of the heating pump 104, and the controlling device is connected with a drive device 3 of the heating pump 104.

Specifically, the heating pump 104 comprises a housing 1, an impeller 2, a heating pipe 4, a baffle plate and the drive device 3.

The drive device 3 comprises a stator 31, a rotor 32, a rotating shaft 33 and a shell 34. Three screw holes are disposed uniformly in the shell 34 of the drive device 3. The stator 31 has corresponding screw grooves. The rotor 32 is installed on the rotating shaft 33, and the two ends of the rotor 32 have a bearing 35 and a small gasket ring 19.

The housing 1 comprises an upper pump housing 11 and a lower pump housing 12. The lower pump housing 12 has a pump housing section 121 and a rotor sleeve 122, and the rotor 32 is sleeved inside the rotor sleeve 122. The lower pump housing 12 and the cover of the rotor 32 are an integrated structure, and through a one-step molding process, processing and installing costs are saved. The pump housing section 121 comprises an installation port 1212 and a water outlet pipe section 1211, and has three screw holes disposed uniformly. The screw holes of the lower pump housing 12, the screw grooves of the stator 31 and the screw holes in the shell 34 of the drive device 3 are connected together through three screws.

A partition plate is connected with the rotating shaft 33 of the drive device 3 through the small gasket ring 19 and the bearing 35.

The impeller 2 is connected with the rotating shaft 33 through a hub. The back plate 23 of the impeller 2 is integrated with the hub. A blade 22 extends upwards from the back plate 23 to the cover plate 21 of the impeller 2. The cover plate 21 of the impeller 2 comprises an arc-shaped structure.

The heating pipe 4 is connected with the upper pump housing 11 through a connecting structure 43. The heating pipe 4, the connecting structure 43 and the upper pump housing 11 constitute a heater component. The upper pump housing 11 is composed by a straight pipe section 112, a rotating section 113, an inner pipe section 111 and a water inlet pipe section 114. The rotating section 113 is connected to the installation port 1212 of the lower pump housing 12 through a first gasket ring 19, and defines the heating cavity 13 together with the partition plate. The water inlet pipe section 114 is connected with the rotating section 113 through the reinforcing rib 115. The heating pipe 4 is composed by a straight-line heating section 41 and an arc heating section, and the end portion of the straight-line heating section 41 is installed on the top of the straight pipe section 112 of the upper pump housing 11 through the connecting structure 43. The arc heating section is connected with the straight-line heating section 41 and is placed in the heating cavity 13. The upper pump housing 11 is a flame-retardant upper pump housing 11.

The inner pipe section 111 of the upper pump housing 11 wraps the portion of the cover plate 21 of the impeller 2; there is a gap 15 between the inner surface of the inner pipe section 111 and the outer surface of the cover plate 21 of the impeller 2; and the gap 15 can prevent the impeller 2 from scratching the upper pump housing 11 when the impeller 2 rotates. However, the gap 15 can render that the liquid flows back to the inlet of the impeller 2 when the liquid passes the gap 15. The diameter of the fourth end 1113 of the inner pipe section 111 is the maximum outer diameter D1 of the inner pipe section 111. The diameter of the second end 212 of the cover plate 21 is the maximum outer diameter D2 of the cover plate 21. The maximum outer diameter D1 of the inner pipe section 111 of the upper pump housing 11 is greater than or equal to the maximum outer diameter D2 of the cover plate 21 of the impeller 2.

It has been verified by simulation experiments that when the maximum outer diameter of the inner pipe section 111 of the upper pump housing 11 is smaller than the maximum outer diameter of the cover plate 21 of the impeller 2, the liquid thrown out from the impeller 2 can easily flow into the gap 15 in the heating cavity 13 directly.

When the maximum outer diameter D1 of the inner pipe section 111 of the upper pump housing 11 is equal to the maximum outer diameter D2 of the cover plate 21 of the impeller 2, the liquid thrown out by the impeller 2 is blocked by the outermost face of the inner pipe section 111 of the upper pump housing 11, and the liquid does not easily flow into the gap 15 directly, and thus the backflow is reduced.

When the maximum outer diameter D1 of the inner pipe section 111 of the upper pump housing 11 is greater than the maximum outer diameter D2 of the cover plate 21 of the impeller 2, the liquid thrown out by the impeller 2 is blocked by the outer ring of the inner pipe section 111 of the upper pump housing 11, and the liquid does not easily flow into the gap 15, and thus the backflow is reduced.

In this way, according to the present specific embodiment, the arrangement of the internal heating cavity 13 and the heating pipe 4 is a completely new design, and the matching structure of the cover plate 21 on the impeller 2 is re-designed. By increasing the on-way resistance and a blocking structure, the purpose of reducing the backflow to the gap 15 of the impeller 2 is achieved, thereby improving the hydraulic efficiency of the water pump. In addition, the costs are low, the volume of the pump will not be increased, and the improvement of the efficiency of the pump also helps to reduce the volume of the pump.

In the present invention, the terms of "first", "second" and "third" are used only for the purpose of description and shall not be understood to indicate or imply any relative importance, unless otherwise clearly defined. The term of "multiple" indicates two or more, unless otherwise clearly defined. The terms "installing", "connecting with", "connected to", "fix" and the like should be understood in a broad sense, for example, the term "connected with" can be a fixed connection, a detachable connection, or an integral connection, and the term "connected to" can be a direct connection or an indirect connection through an intermediate medium. For a person skilled in the art, they may understand the specific meanings of the above-mentioned terms in the present invention according to specific circumstances.

In the description of the present invention, it needs to be understood that the orientation or position relations indicated by the terms "upper", "lower", "left", "right", "front", "behind" and the like are based on the orientation or position relations shown in the accompanying drawings, and they are just intended to conveniently describe the present invention and simplify the description, and are not intended to indicate or imply that the devices or elements as indicated should have specific orientations or should be configured or operated in specific orientations, and then should not be construed as limitations to the present invention.

In the specification of the present invention, the terms of "an embodiment", "some embodiments", "specific embodiment" and the like mean that the specific features, structures, materials or characteristics described in combination with the embodiment or example are contained in at least one embodiment or example of the present invention. In the specification, the illustrative expressions of the above terms may not indicate the same embodiment or example. In addition, the specific features, structures, materials or characteristics described above may be combined in an appropriate method in one or more of any embodiments or examples.

## Claims

1. A heating pump (104), comprising:
a housing (1), wherein a heating cavity (13) is provided in the housing (1), and the housing (1) is provided with a water inlet (1141) which is communicated with the heating cavity (13);
an impeller (2), wherein the impeller (2) is provided in the heating cavity (13), the impeller (2) comprises an annular cover plate (21), a first end (211) of the cover plate (21) defines a water inlet port (213) which is correspondingly communicated with the water inlet (1141) in a surrounding manner, and a second end (212) of the cover plate (21) extends in a direction away from the water inlet (1141) along an axial direction of the impeller (2) and expands outwards;
wherein, an annular matching surface (1111) is provided in the heating cavity (13); an outer side of the cover plate (21) is wrapped with the matching surface (1111), and there is a gap between the matching surface (1111) and the cover plate (21); the matching surface (1111) has a third end (1112) and a fourth end (1113) which are arranged in an axial direction of the impeller (2); the fourth end (1113) is arranged corresponding to the second end (212); and a diameter of the fourth end (1113) is greater than or equal to a diameter of the second end (212);
wherein the cover plate (21) comprises a straight cylindrical section (214) and an arc expansion section (215) which is connected with the straight cylindrical section (214), an end of the straight cylindrical section (214) which is away from the arc expansion section (215) forms the first end (211) of the cover plate (21), and an end of the arc expansion (215) section which is away from the straight cylindrical section (214) forms the second end (212) of the cover plate (21);
the matching surface (1111) comprises a straight line section and an enlarging section (1115) which is connected with the straight line section (1114), an end of the straight line section (1114) which is away from the enlarging section (1115) forms the third end (1112) of the matching surface (1111), and an end of the enlarging section (1115) which is away from the straight line section (1114) forms the fourth end (1113) of the matching surface (1111);
the straight line section (1114) surrounds the straight cylindrical section (214), and the enlarging section (1115) surrounds the arc expansion section (215);
wherein a length of the straight line section (1114) is greater than a length of the straight cylindrical section (214);
**characterized in that** an end of the straight line section (1114) which is away from the enlarging section (1115) is connected with an annular bevel (16); and
the annular bevel (16) extends obliquely in a direction close to the straight cylindrical section (214) along a direction from outside to inside, and **in that** the gap between the matching surface (1111) and the cover plate (21) is disposed uniformly.

2. The heating pump according to claim 1, wherein
the gap between the annular matching surface (1111) and the cover plate (21) is in a range of 0.3 mm to 2.5 mm.

3. The heating pump according to claim 1, wherein
a shielding hump (17) is projected from the fourth end (1113), and an end of the shielding hump (17) which is away from the fourth end (1113) extends along the axial direction of the impeller (2) and surrounds the second end (212).

4. The heating pump according to claim 3, wherein
the end of the shielding hump (17) which is away from the fourth end (1113) is flush with the second end (212).

5. The heating pump according to claim 1, wherein
the housing (1) is formed with an inner pipe section (111), and an inner wall face of the inner pipe section (111) forms the matching surface (21).

6. The heating pump according to claim 5, wherein the housing (1) comprises:
an upper pump housing (11), wherein the upper pump housing (11) is provided with the inner pipe section (111); and
a lower pump housing (12), wherein the lower pump housing (12) is connected with the upper pump housing (11), an end of the lower pump housing (12) which is away from the upper pump housing (11) is provided with a baffle plate (18), and the heating cavity (13) is enclosed by the baffle plate (18), the upper pump housing (11) and the lower pump housing (12);
wherein, the impeller (2) is connected with a drive device (3), and the drive device (3) comprises a stator (31), a rotor (32) and a rotating shaft (33), and the rotating shaft (33) goes through the baffle plate (18) and is connected with the impeller (2); and
the lower pump housing (12) comprises a pump housing section (121) and a rotor sleeve (122); the rotor (32) is located in the rotor sleeve (122); the stator (31) is sleeved around an outer side of the rotor sleeve (122); and the pump housing section (121) is connected with the upper pump housing (11) and is disposed with a water outlet pipe section (1211).

7. The heating pump according to claim 6, wherein
the upper pump housing (11) comprises a straight pipe section (112) and a rotating section (113) which is connected with the straight pipe section (112), the rotating section (113) is sleeved around an outer side of the inner pipe section (111), the water inlet (1141) is connected with the water inlet pipe section (114), and the water inlet pipe section (114) is connected with the rotating section (113) through a reinforcing rib (115);
a heating pipe (4) is provided in the heating cavity (13) , and the heating pipe (4) comprises a straight-line heating section (41) and an arc heating section (42); and
the straight-line heating section (41) is located within the straight pipe section (112), and the arc heating section (42) is located within the rotating section (113).

8. The heating pump according to claim 6, wherein
a first gasket ring (19) is provided between the upper pump housing (11) and the lower pump housing (12);
a second gasket ring (19) is provided between the baffle plate (18) and the rotating shaft (33);
the upper pump housing (11) is a flame-retardant pump housing; and
the rotor sleeve (122) and the pump housing section (121) are an integrated structure.

9. A dish washing machine (100), comprising:
a dish washing machine body (102); and
a heating pump (104) according to any one of claims 1 to 8, and the heating pump (104) is connected with the dish washing machine body (102).

## Patentansprüche

1. Heizpumpe (104), umfassend:
ein Gehäuse (1), wobei eine Heizkavität (13) in dem Gehäuse (1) bereitgestellt ist und das Gehäuse (1) mit einem Wassereinlass (1141) versehen ist, der mit der Heizkavität (13) in Verbindung steht,
ein Laufrad (2), wobei das Laufrad (2) in der Heizkavität (13) bereitgestellt ist, wobei das Laufrad (2) eine ringförmige Deckplatte (21) umfasst, ein erstes Ende (211) der Deckplatte (21) einen Wassereinlassanschluss (213) definiert, der entsprechend mit dem Wassereinlass (1141) in einer umgebenden Weise in Verbindung steht, und sich ein zweites Ende (212) der Deckplatte (21) in einer Richtung weg von dem Wassereinlass (1141) entlang einer axialen Richtung des Laufrads (2) erstreckt und sich nach außen aufweitet,
wobei eine ringförmige passende Oberfläche (1111) in der Heizkavität (13) bereitgestellt ist, eine Außenseite der Deckplatte (21) mit der passenden Oberfläche (1111) umhüllt ist und ein Spalt zwischen der passenden Oberfläche (1111) und der Deckplatte (21) vorhanden ist, die passende Oberfläche (1111) ein drittes Ende (1112) und ein viertes Ende (1113) aufweist, die in einer axialen Richtung des Laufrads (2) angeordnet sind, das vierte Ende (1113) entsprechend dem zweiten Ende (212) angeordnet ist und ein Durchmesser des vierten Endes (1113) größer oder gleich einem Durchmesser des zweiten Endes (212) ist,
wobei die Deckplatte (21) einen geraden zylindrischen Abschnitt (214) und einen bogenförmigen Aufweitungsabschnitt (215) umfasst, der mit dem geraden zylindrischen Abschnitt (214) verbunden ist, ein Ende des geraden zylindrischen Abschnitts (214), der von dem bogenförmigen Aufweitungsabschnitt (215) entfernt liegt, das erste Ende (211) der Deckplatte (21) bildet und ein Ende des bogenförmigen Aufweitungsabschnitts (215), der von dem geraden zylindrischen Abschnitt (214) entfernt liegt, das zweite Ende (212) der Deckplatte (21) bildet,
die passende Oberfläche (1111) einen geradlinigen Abschnitt und einen sich vergrößernden Abschnitt (1115) umfasst, der mit dem geradlinigen Abschnitt (1114) verbunden ist, ein Ende des geradlinigen Abschnitts (1114), das von dem sich vergrößernden Abschnitt (1115) entfernt liegt, das dritte Ende (1112) der passenden Oberfläche (1111) bildet und ein Ende des sich vergrößernden Abschnitts (1115), das von dem geradlinigen Abschnitt (1114) entfernt liegt, das vierte Ende (1113) der passenden Oberfläche (1111) bildet,
der geradlinige Abschnitt (1114) den geraden zylindrischen Abschnitt (214) umgibt und der sich vergrößernde Abschnitt (1115) den bogenförmigen Aufweitungsabschnitt (215) umgibt,
wobei eine Länge des geradlinigen Abschnitts (1114) größer ist als eine Länge des geraden zylindrischen Abschnitts (214),
**dadurch gekennzeichnet, dass** ein Ende des geradlinigen Abschnitts (1114), das von dem sich vergrößernden Abschnitt (1115) entfernt liegt, mit einer ringförmigen Fase (16) verbunden ist, und
die ringförmige Fase (16) sich schräg in einer Richtung nahe dem geraden zylindrischen Abschnitt (214) entlang einer Richtung von außen nach innen erstreckt und dadurch, dass der Spalt zwischen der passenden Oberfläche (1111) und der Deckplatte (21) gleichförmig angeordnet ist.

2. Heizpumpe nach Anspruch 1, wobei
der Spalt zwischen der ringförmigen passenden Oberfläche (1111) und der Deckplatte (21) in einem Bereich von 0,3 mm bis 2,5 mm liegt.

3. Heizpumpe nach Anspruch 1, wobei
eine Abschirmwölbung (17) von dem vierten Ende (1113) hervorsteht und sich ein Ende der Abschirmwölbung (17), das von dem vierten Ende (1113) entfernt liegt, entlang der axialen Richtung des Laufrads (2) erstreckt und das zweite Ende (212) umgibt.

4. Heizpumpe nach Anspruch 3, wobei
das Ende der Abschirmwölbung (17), das von dem vierten Ende (1113) entfernt liegt, mit dem zweiten Ende (212) bündig ist.

5. Heizpumpe nach Anspruch 1, wobei
das Gehäuse (1) mit einem inneren Rohrabschnitt (111) gebildet ist und eine Innenwandfläche des inneren Rohrabschnitts (111) die passende Oberfläche (21) bildet.

6. Heizpumpe nach Anspruch 5, wobei das Gehäuse (1) Folgendes umfasst:
ein oberes Pumpengehäuse (11), wobei das obere Pumpengehäuse (11) mit dem inneren Pumpenabschnitt (111) versehen ist, und
ein unteres Pumpengehäuse (12), wobei das untere Pumpengehäuse (12) mit dem oberen Pumpengehäuse (11) verbunden ist, ein Ende des unteren Pumpengehäuses (12), das von dem oberen Pumpengehäuse (11) entfernt liegt, mit einer Prallplatte (18) versehen ist und die Heizkavität (13) von der Prallplatte (18), dem oberen Pumpengehäuse (11) und dem unteren Pumpengehäuse (12) umschlossen ist,
wobei das Laufrad (2) mit einer Antriebsvorrichtung (3) verbunden ist und die Antriebsvorrichtung (3) einen Stator (31), einen Rotor (32) und eine Drehwelle (33) umfasst, und die Drehwelle (33) durch die Prallplatte (18) verläuft und mit dem Laufrad (2) verbunden ist, und
das untere Pumpengehäuse (12) einen Pumpengehäuseabschnitt (121) und eine Rotorhülse (122) umfasst, sich der Rotor (32) in der Rotorhülse (122) befindet, der Stator (31) um eine Außenseite der Rotorhülse (122) gehülst ist und der Pumpengehäuseabschnitt (121) mit dem oberen Pumpengehäuse (11) verbunden ist und mit einem Wasserauslassrohrabschnitt (1211) angeordnet ist.

7. Heizpumpe nach Anspruch 6, wobei
das obere Pumpengehäuse (11) einen geraden Rohrabschnitt (112) und einen Drehabschnitt (113) umfasst, der mit dem geraden Rohrabschnitt (112) verbunden ist, der Drehabschnitt (113) um eine Außenseite des inneren Rohrabschnitts (111) gehülst ist, der Wassereinlass (1141) mit dem Wassereinlassrohrabschnitt (114) verbunden ist und der Wassereinlassrohrabschnitt (114) mit dem Drehabschnitt (113) durch eine Verstärkungsrippe (115) verbunden ist,
ein Heizrohr (4) in der Heizkavität (13) bereitgestellt ist und das Heizrohr (4) einen geradlinigen Heizabschnitt (41) und einen bogenförmigen Heizabschnitt (42) umfasst und
der geradlinige Heizabschnitt (41) sich innerhalb des geraden Rohrabschnitts (112) befindet und der bogenförmige Heizabschnitt (42) sich innerhalb des Drehabschnitts (113) befindet.

8. Heizpumpe nach Anpruch 6, wobei
ein erster Dichtungsring (19) zwischen dem oberen Pumpengehäuse (11) und dem unteren Pumpengehäuse (12) bereitgestellt ist,
ein zweiter Dichtungsring (19) zwischen der Prallplatte (18) und der Drehwelle (33) bereitgestellt ist,
das obere Pumpengehäuse (11) ein flammhemmendes Pumpengehäuse ist und
die Rotorhülse (122) und der Pumpengehäuseabschnitt (121) eine integrale Struktur sind.

9. Geschirrspülmaschine (100), umfassend:
einen Geschirrspülmaschinenkörper (102) und
eine Heizpumpe (104) nach einem der Ansprüche 1 bis 8, und die Heizpumpe (104) mit dem Geschirrspülmaschinenkörper (102) verbunden ist.

## Revendications

1. Pompe de chauffage (104) comportant :
un boîtier (1), dans laquelle une cavité de chauffage (13) est mise en oeuvre dans le boîtier (1), et le boîtier (1) est doté d'une entrée d'eau (1141) qui est en communication avec la cavité de chauffage (13) ;
une roue (2), dans laquelle la roue (2) est mise en oeuvre dans la cavité de chauffage (13), la roue (2) comporte une plaque formant couvercle annulaire (21), une première extrémité (211) de la plaque formant couvercle (21) définit un orifice d'entrée d'eau (213) qui est en communication de manière correspondante avec l'entrée d'eau (1141) de manière périphérique, et une deuxième extrémité (212) de la plaque formant couvercle (21) s'étend dans une direction allant à l'opposé de l'entrée d'eau (1141) le long d'une direction axiale de la roue (2) et s'étend vers l'extérieur ;
dans laquelle une surface d'appariement annulaire (1111) est mise en oeuvre dans la cavité de chauffage (13) ; un côté extérieur de la plaque formant couvercle (21) est enveloppé avec la surface d'appariement (1111), et il y a un espace entre la surface d'appariement (1111) et la plaque formant couvercle (21) ; la surface d'appariement (1111) a une troisième extrémité (1112) et une quatrième extrémité (1113) qui sont agencées dans une direction axiale de la roue (2) ; la quatrième extrémité (1113) est agencée de manière à correspondre à la deuxième extrémité (212) ; et un diamètre de la quatrième extrémité (1113) est supérieur ou égal à un diamètre de la deuxième extrémité (212) ;
dans laquelle la plaque formant couvercle (21) comporte une section cylindrique droite (214) et une section d'expansion en arc (215) qui est reliée à la section cylindrique droite (214), une extrémité de la section cylindrique droite (214) qui est à l'opposé de la section d'expansion en arc (215) forme la première extrémité (211) de la plaque formant couvercle (21), et une extrémité de la section d'expansion en arc (215) qui est à l'opposé de la section cylindrique droite (214) forme la deuxième extrémité (212) de la plaque formant couvercle (21) ;
la surface d'appariement (1111) comporte une section droite et une section d'élargissement (1115) qui est reliée à la section droite (1114), une extrémité de la section droite (1114) qui est à l'opposé de la section d'élargissement (1115) forme la troisième extrémité (1112) de la surface d'appariement (1111), et une extrémité de la section d'élargissement (1115) qui est à l'opposé de la section droite (1114) forme la quatrième extrémité (1113) de la surface d'appariement (1111) ;
la section droite (1114) entoure la section cylindrique droite (214), et la section d'élargissement (1115) entoure la section d'expansion en arc (215) ;
dans laquelle une longueur de la section droite (1114) est supérieure à une longueur de la section cylindrique droite (214) ;
**caractérisée en ce qu'**une extrémité de la section droite (1114) qui est à l'opposé de la section d'élargissement (1115) est reliée à un chanfrein annulaire (16) ; et
le chanfrein annulaire (16) s'étend de manière oblique dans une direction proche de la section cylindrique droite (214) le long d'une direction allant de l'extérieur vers l'intérieur, et **en ce que** l'espace entre la surface d'appariement (1111) et la plaque formant couvercle (21) est disposé uniformément.

2. Pompe de chauffage selon la revendication 1, dans laquelle :
l'espace entre la surface d'appariement annulaire (1111) et la plaque formant couvercle (21) se trouve dans une plage allant de 0,3 mm à 2,5 mm.

3. Pompe de chauffage selon la revendication 1, dans laquelle :
un bosse de protection (17) fait saillie depuis la quatrième extrémité (1113), et une extrémité de la bosse de protection (17) qui est à l'opposé de la quatrième extrémité (1113) s'étend le long de la direction axiale de la roue (2) et entoure la deuxième extrémité (212).

4. Pompe de chauffage selon la revendication 3, dans laquelle :
l'extrémité de la bosse de protection (17) qui est à l'opposé de la quatrième extrémité (1113) affleure la deuxième extrémité (212).

5. Pompe de chauffage selon la revendication 1, dans laquelle :
le boîtier (1) est formé avec une section de tuyau interne (111), et une face de paroi interne de la section de tuyau interne (111) forme la surface d'appariement (21).

6. Pompe de chauffage selon la revendication 5, dans laquelle le boîtier (1) comporte :
un boîtier de pompe supérieur (11), dans laquelle le boîtier de pompe supérieur (11) est doté de la section de tuyau interne (111) ; et
un boîtier de pompe inférieur (12), dans laquelle le boîtier de pompe inférieur (12) est relié au boîtier de pompe supérieur (11), une extrémité du boîtier de pompe inférieur (12) qui est à l'opposé du boîtier de pompe supérieur (11) est dotée d'un déflecteur (18), et la cavité de chauffage (13) est entourée par le déflecteur (18), le boîtier de pompe supérieur (11) et le boîtier de pompe inférieur (12) ;
dans laquelle la roue (2) est reliée à un dispositif d'entraînement (3), et le dispositif d'entraînement (3) comporte un stator (31), un rotor (32) et un arbre rotatif (33), et l'arbre rotatif (33) traverse le déflecteur (18) et est relié à la roue (2) ; et
le boîtier de pompe inférieur (12) comporte une section de boîtier de pompe (121) et un manchon de rotor (122) ; le rotor (32) est situé dans le manchon de rotor (122) ; le stator (31) est enveloppé autour d'un côté extérieur du manchon de rotor (122) ; et la section de boîtier de pompe (121) est reliée au boîtier de pompe supérieur (11) et est disposée avec une section de tuyau de sortie d'eau (1211).

7. Pompe de chauffage selon la revendication 6, dans laquelle :
le boîtier de pompe supérieur (11) comporte une section de tuyau droite (112) et une section rotative (113) qui est reliée à la section de tuyau droite (112), la section rotative (113) est enveloppée autour d'un côté extérieur de la section de tuyau interne (111), l'entrée d'eau (1141) est reliée à la section de tuyau d'entrée d'eau (114), et la section de tuyau d'entrée d'eau (114) est reliée à la section rotative (113) par l'intermédiaire d'une nervure de renforcement (115) ;
un tuyau de chauffage (4) est mis en oeuvre dans la cavité de chauffage (13), et le tuyau de chauffage (4) comporte une section de chauffage droite (41) et une section de chauffage en arc (42) ; et
la section de chauffage droite (41) est située à l'intérieur de la section de tuyau droite (112), et la section de chauffage en arc (42) est située à l'intérieur de la section rotative (113).

8. Pompe de chauffage selon la revendication 6, dans laquelle
une première bague d'étanchéité (19) est mise en oeuvre entre le boîtier de pompe supérieur (11) et le boîtier de pompe inférieur (12) ;
une deuxième bague d'étanchéité (19) est mise en oeuvre entre le déflecteur (18) et l'arbre rotatif (33) ;
le boîtier de pompe supérieur (11) est un boîtier de pompe ignifuge ; et
le manchon de rotor (122) et la section de boîtier de pompe (121) forment une structure intégrée.

9. Machine à laver la vaisselle (100), comportant :
un corps (102) de machine à laver la vaisselle ; et
une pompe de chauffage (104) selon l'une quelconque des revendications 1 à 8, et la pompe de chauffage (104) est reliée au corps (102) de machine à laver la vaisselle.
